# NEUE EUROPÄISCHE PATENTSCHRIFT

(11) **EP 0 810 274 B2**
(45) Veröffentlichungstag und Bekanntmachung des Hinweises auf die Entscheidung über den Einspruch: **01.10.2008**
(45) Hinweis auf die Patenterteilung: 24.10.2001
(21) Anmeldenummer: 97108625.1
(22) Anmeldetag: 28.05.1997
(51) Int. Cl.: C09D 133/00, C08F 2/22

(54) **Bindemittel für emissionsarme Beschichtungsmassen**
Binder for low-emission coating compositions
Liant pour compositions de revêtement avec émission à faible teneur

(30) Priorität: 29.05.1996 DE 19621574
(43) Veröffentlichungstag der Anmeldung: 03.12.1997
(73) Patentinhaber: BASF SE, 67056 Ludwigshafen (DE)
(72) Erfinder: Baumstark, Roland, Dr., 67434 Neustadt (DE); Dersch, Rolf, Dr., 67434 Neustadt (DE)
(74) Vertreter: Kinzebach, Werner

(56) Entgegenhaltungen:
- EP-A- 0 071 070
- EP-A- 0 115 468
- EP-A- 0 622 434
- WO-A-94/21699
- US-A- 5 399 617
- US-A- 5 455 298

## Beschreibung

Die vorliegende Erfindung betrifft geruchsarme, lösungsmittelfrei verarbeitbare Bindemittel auf der Basis von Polymerisatdispersionen mit einer mittleren Filmbildetemperatur unterhalb 10°C.

Zur Reduzierung der Umweltbelastung und aus arbeitshygienischen Gründen ist es wünschenswert, daß Beschichtungsmassen, insbesondere solche, die in geschlossenen Räumen verwendet werden, wie beispielsweise Dispersionsfarben, Kunststoff-Dispersions-Putze oder Fliesenkleber keine nichtwässrigen, flüchtigen, organischen oder anorganischen Bestandteile an die Umgebung abgeben. Dies kann im Prinzip teilweise dadurch erreicht werden, daß man als Bindemittel für diese Beschichtungssysteme wässrige Polymerisatdispersionen verwendet.

Konventionelle Bindemittel auf Basis wässriger Polymerisatdispersionen enthalten jedoch in der Regel noch geringe Mengen an organischen Lösungsmitteln. Diese sind notwendig, um die mittlere Filmbildetemperatur der Bindemittel zu verringern und so eine Verarbeitung der Beschichtungsmassen auch bei niedrigen Temperaturen zu gewährleisten. Auch kann die mittlere Filmbildetemperatur der polymeren Bindemittel durch "innere Weichmachung", d.h. durch Herabsetzen der Glastemperatur des Bindemittelpolymerisats verringert werden (siehe Ullmann's Encyclopaedia of Industrial Chemistry, 5 Ed. Vol. A21, S. 169). Bei einer zu niedrigen Filmbildetemperatur des polymeren Bindemittels besteht jedoch die Gefahr, daß die Beschichtungsmassen ein schlechtes Pigmentbindevermögen und keine ausreichende mechanische Festigkeit aufweisen sowie darüber hinaus leicht anschmutzen (siehe H. Rinno, farbe + lack, 99 (1993) 697 ff).

Aus Kostengründen ist es vorteilhaft, daß das Bindemittel große Mengen an Füllstoffen zu binden vermag. Dispersionsinnenfarben weisen beispielsweise Pigmentvolumenkonzentrationen PVK (PVK= Pigmentvolumen/(Pigmentvolumen + Bindemittelvolumen); vgl. Ullmanns Enzyklopädie der Technischen Chemie, 4. Aufl. Bd. 15, S. 667) im Bereich von 50 bis 85 % auf. Wird die vom Bindemittel tolerierte PVK überschritten, weist der Anstrichfilm keine ausreichende Naßabriebfestigkeit mehr auf. Nach H. Warson ('Synthetic Resin Emulsions', E.Benn Ltd., London, 1972, S. 776ff) weisen Polymerisate dann eine hohe Pigmentbindekraft auf, wenn sie 1 bis 4 Gew.-%, Carboxylgruppen aufweisende Monomere einpolymerisiert enthalten. Bei hochwertigen Bindemitteln liegt der Gehalt an diesen Monomeren sogar zwischen 2,5 und 7 Gew.-%. Andererseits besteht bei einem zu hohen Säuregehalt die Gefahr, daß das Polymerisat zu wasserlöslich wird und somit die Naßabriebfestigkeit der Beschichtungsmassen abnimmt.

In der Literatur finden sich eine Reihe von Beispielen für Polymerisatdispersionen, die sich als lösungsmittelfreie Bindemittel für emissionsarme Beschichtungsmassen eignen. So beschreiben beispielsweise die EP-B-327 006 und die EP-B-327 376 Polymerisatdispersionen auf der Basis von Vinylestern, die in geringen Mengen Silanmonomere mit einpolymerisiert enthalten. Die EP-A-612 771 beschreibt ähnliche Bindemittelpolymerisate auf Basis von Acrylestern, die 1 bis 4 Gew.-% Monomere mit Carboxylgruppen und wenigstens ein Silanmonomer einpolymerisiert enthalten. Bereits ein geringer Einbau von Vinylsilanmonomeren erhöht jedoch die Herstellungskosten für die Bindemittel in beträchtlichem Maße. Zudem muß damit gerechnet werden, daß sich durch Hydrolyse der Silangruppen die Eigenschaften des Bindemittels bei Lagerung verändern.

Die EP-A-652 269 beschreibt ein Bindemittel für emissionsarme Beschichtungsmassen aus einem grobteiligen Latex mit Teilchengrößen im Bereich von 100 bis 500 nm und einem feinen Latex mit Teilchengrößen im Bereich von 5 bis 40 nm. Neben den Hauptmonomeren des grobteiligen Latex, die ausgewählt sind unter Styrol, Butadien, Vinylnitrilen, und Acrylestern, enthält der Latex 0,1 bis 5 Gew.-% vernetzende Monomere, 0 bis 20 Gew.-%, vorzugsweise 1 bis 10 Gew.-% ethylenisch ungesättigte Carbonsäuren und 0 bis 40 % weitere Monomere einpolymerisiert. Beispiel 1 beschreibt einen grobteiligen Latex, der aus 75,5 Gew.-% n-Butylacrylat, 10 Gew.-% 2-Ethylhexylacrylat, 9 Gew.-% Styrol, 0,5 Gew.-% Ethylenglykoldimethacrylat, 2,7 Gew.-% Acrylsäure, 0,5 Gew.-% Acrylamid und 0,5 Gew.-% Sulfoethylmethacrylat aufgebaut ist. Die Verwendung von Bindemitteln aus zwei unabhängig voneinander hergestellten Polymerisatdispersionen ist für preiswerte Beschichtungsmassen zu aufwendig. Darüber hinaus liefern die beschriebenen Dispersionsfarben weder bei Verwendung eines Bindemittels aus zwei Polymerisatdispersionen noch bei alleiniger Verwendung der grobteiligen Polymerisatdispersion als Bindemittel Anstrichfilme mit zufriedenstellenden Abriebwerten.

Die EP-A-585156 beschreibt ein Bindemittel für wässrige Dispersionsfarben auf Basis einer wässrigen Acrylatpolymerdispersion. Zur Verbesserung der Abriebwerte von Farbanstrichen wird dem Bindemittel eine Epoxidharzdispersion in Mengen von 0,1 bis 4 Gew.% zugesetzt. Die verwendete Acrylatdispersion enthält 0,1 bis 5 Gew.-% vernetzende Monomere, 0,1 bis 5 Gew.-% α,β-ungesättigte Carbonsäuren und 0,1 bis 5 Gew.-% Sulfonatmonomere einpolymersiert. Beispiel 1 beschreibt ein Acrylatpolymerisat, das aus 48,7 Gew.-Teilen Styrol, 48,6 Gew.-Teilen n-Butylacrylat, 4,7 Gew.-Teilen Acrylsäure und 0,5 Gew.-Teilen Methallylsulfonat aufgebaut ist. Die unter Verwendung dieses Polymerisats erhaltenen Farbanstriche weisen ebenfalls keine zufriedenstellenden Abriebwerte auf. Der Einsatz von Epoxidkomponenten erscheint für die gewünschten Anwendungen aufgrund deren Toxizität wenig geeignet.

Die WO 94/21699 beschreibt Bindemittel für lösungsmittelfreie Dispersionsfarben mit verbesserter Abwaschbarkeit, die zu 60 bis 100 Gew.-% aus Acryl- oder Methacrylsäureestern, 0 bis 40 Gew.-% aus vinylaromatischen Monomeren, 0 bis 5 Gew.-% aus α,β-ungesättigten Mono- oder Polycarbonsäuren und 0 bis 3 Gew.-% aus wenigstens einem α,β-ungesättigten Amid aufgebaut sind. Die Beispiele beschreiben Polymerisatdispersionen, die wenigstens 2,5 Gew.-Teile Acrylsäure einpolymerisiert enthalten. Die in den Beispielen 6 bis 9 beschriebenen Dispersionsfarben, die als Bindemittel diese Polymerisate enthalten, weisen ebenfalls keine zufriedenstellenden Abriebwerte auf.

Es wurde nun überraschenderweise gefunden, daß Polymerisat-Dispersionen, die weniger als 1 Gew.-% saure Monomere bzw. deren Salze einpolymerisiert enthalten, sich gegenüber den Bindemitteln des Standes der Technik bei vergleichbarer kolloidaler Stabilität bei Formulierungen als Dispersionsfarben durch höhere Naßabriebfestigkeit auszeichnen. Dieser Vorteil besteht auch gegenüber Formulierungen, die Bindemittel aus zwei oder mehr Polymerisat-Komponenten enthalten.

Gegenstand der vorliegenden Erfindung sind daher geruchsarme, lösungsmittelfrei verarbeitbare Bindemittel auf der Basis wenigstens einer wässrigen Polymerisatdispersion mit einer Mindestfilmbildetemperatur unterhalb 10°C, wobei die wässrige Polymerisatdispersion erhältlich ist durch radikalische wässrige Emulsionspolymerisation einer Monomermischung, enthaltend
a) 45 bis 70 Gew.-Teile wenigstens eines Monomers, dessen Homopolymerisat eine Glastemperatur T_{g} < 20°C aufweist,
b) 30 bis 55 Gew.-Teilen wenigstens eines Monomers, dessen Homopolymerisat eine Glastemperatur T_{g} > 50°C aufweist,
c) 0 bis 0,5 Gew.-Teilen wenigstens eines Monomers mit sauren Gruppen und
d) 0,5 bis 2 Gew.-Teilen wenigstens eines weiteren Monomers, ausgewählt unter Amiden α,β-ungesättigter C₃-C₆-Carbonsäuren, deren Hydroxy-C₂-C₆-alkylestern und/oder N-Vinyllactamen,
mit der Maßgabe, daß die Summe der Gew. -Teile a) plus b) 100 Gew.-Teile beträgt, in Gegenwart anionischer Emulgatoren und wenigstens eines aliphatischen nichtionischen Emulgators.

Mit der Glastemperatur T_{g} ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt; sie wird nach dem DSC-Verfahren ermittelt (Differential Scanning Calorimetry, 20 K/min, mid-point). Die T_{g}-Werte für die Homopolymerisate der meisten Monomeren sind bekannt und z.B. in Ullmann's Ecyclopedia of Industrial Chemistry, VCH Weinheim, 1992, Bd.5, Vol. A21, S. 169 aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989).

Unter C₁-Cₙ-Alkylgruppen versteht man im folgenden lineare oder verzweigte Alkylreste mit 1 bis n-Kohlenstoffatomen, beispielsweise Methyl, Ethyl, Propyl, n-Butyl, sec-Butyl, iso-Butyl, t-Butyl, Pentyl, n-Hexyl, 2-Ethylhexyl, n-Decyl, Dodecyl, Lauryl, Stearyl. Mit C₅-C₁₀-Cycloalkylgruppen sind vorzugsweise Cyclopentyl oder Cyclohexylgruppen gemeint, die gegebenenfalls durch 1, 2 oder 3 C₁-C₄-Alkylgruppen substituiert sind.

Die in den Bindemitteln enthaltenen Polymerisate sind zu 45 bis 70 Gew.-Teilen, vorzugsweise 50 bis 65 Gew.-Teilen aus Monomeren a) aufgebaut. Geeignete Monomere a) sind vorzugsweise Vinylether von C₃-C₁₀-Alkanolen, verzweigte und unverzweigte C₃-C₁₀-Olefine, C₁-C₁₀-Alkylacrylate, C₅-C₁₀-Alkylmethacrylate, C₅-C₁₀-Cycloalkyl(meth)acrylate, C₁-C₁₀-Dialkylmaleinate und/oder C₁-C₁₀-Dialkylfumarate. Besonders bevorzugt werden solche Monomere a) verwendet, deren Homopolymerisate Glastemperaturen unterhalb 0°C aufweisen. Insbesonders bevorzugt werden als Monomere a) Ethylacrylat, n-Propylacrylat, n-Butylacrylat, Isobutylacrylat, sec-Butylacrylat, n-Hexylacrylat, 2-Ethylhexylacrylat, n-Hexylmethacrylat, 2-Ethylhexylmethacrylat, Di-n-butylmaleinat und/oder Di-n-butylfumarat verwendet.

Geeignete Monomere b) sind vinylaromatische Monomere und/oder α,β-ungesättigte Carbonsäurenitrile oder Carbonsäuredinitrile. Sie werden in Mengen von 30 bis 55 Gew.-Teilen, und vorzugsweise 35 bis 50 Gew.-Teilen verwendet. Unter vinylaromatischen Monomeren versteht man insbesondere Derivate des Styrols oder des α-Methyl-styrols, in denen die Phenylkerne gegebenenfalls durch 1, 2 oder 3 C₁-C₄-Alkylgruppen, Chlor und/oder Methoxygruppen substituiert sind. Bevorzugt werden solche Monomere, deren Homopolymerisate eine Glastemperatur oberhalb 80°C aufweisen. Besonders bevorzugte Monomere sind Styrol, α-Methylstyrol, o- oder p-Vinyltoluol, Acrylnitril, Methacrylnitril, Maleinsäuredinitril, Fumarsäuredinitril oder deren Mischungen.

Die erfindungsgemäßen Bindemittelpolymerisate können als Monomere c) ethylenisch ungesättigte Monomere, die anionische Gruppen bilden können, in Mengen von bis zu 0,5 Gew.-Teilen und insbesondere bis zu 0,3 Gew.-Teilen, bezogen auf die Summe der Komponenten a) plus b), einpolymerisiert enthalten. Bei diesen Gruppen handelt es sich vorzugsweise um Carboxylat-, Phosphonat- oder Sulfonatgruppen, insbesondere Carboxylatgruppen. Besonders bevorzugte Monomere c) sind monoethylenisch ungesättigte Alkyl- oder Arylsulfon säuren wie Vinylsulfonsäure, Methallylsulfonsäure, Vinylbenzolsulfonsäure, Acrylamidoethansulfonsäure, Acrylamido-2-methylpropansulfonsäure, 2-Sulfoethyl(meth)acrylat, Sulfopropyl(meth)acrylat sowie α,β-ungesättigte C₃-C₆-Carbonsäuren, α,β-ungesättigte C₄-C₈-Dicarbonsäuren oder deren Anhydride wie Acrylsäure, Methacrylsäure, Crotonsäure, Fumarsäure, Maleinsäure, Maleinsäureanhydrid, Itaconsäure und Itaconsäureanhydrid sowie die Alkalimetall salze der genannten Monomere, insbesondere deren Natriumsalze .

Die erfindungsgemäßen Bindemittelpolymerisate enthalten Monomere d) in Mengen von 0,5 bis 2 Gew.-Teilen, insbesondere in Mengen von 0,5 bis 1,5 Gew.-Teilen, einpolymerisiert enthalten. Bevorzugte Monomere sind die Amide und die Hydroxyalkylester der α,β-ungesättigten C₃-C₆-Carbonsäuren, besonders bevorzugt Acrylamid, Methacrylamid, 2-Hydroxyethylacrylat, 2-Hydroxyethylmethacrylat, 2-Hydroxypropyl(meth)acrylat oder 1,4-Butandiolmonoacrylat. Ein weiteres geeignetes Monomer ist N-Vinylpyrrolidon.

Neben den genannten Monomeren a), b), c) und d) können die erfindungsgemäßen Bindemittelpolymerisate auch weitere Monomere enthalten, um den jeweiligen Beschichtungsmassen eine höhere Festigkeit zu verleihen. Hier sind beispielsweise Siloxangruppen enthaltende Monomere, wie die vinyltrialkoxysilane, z.B. vinyltrimethoxysilan, Alkylvinyldialkoxysilane oder (Meth)acryloxyalkyltrialkoxysilane, z.B. (Meth)acryloxyethyltrimethoxysilan, (Meth)acryloxypropyltrimethoxysilan zu nennen. Die genannten Monomere können in Mengen von 0,05 bis 1, vorzugsweise 0,05 bis 0,5 Gew.-Teilen, bezogen auf 100 Gew.-Teile Monomere a) plus b) verwendet werden

Die als erfindungsgemäße Bindemittel verwendeten wässrigen Polymerisatdispersionen werden durch radikalische Emulsionspolymerisation der genannten Monomere a) bis d) in Gegenwart von 0,1 bis 0,5 Gew.-%, vorzugsweise 0,1 bis 0,4 Gew.-% und insbesondere 0,1 bis 0,3 Gew.-%, jeweils bezogen auf die Menge der Monomere a) und b), wenigstens eines radikalischen Polymerisationsinitiators durchgeführt.

Als radikalische Polymerisationsinitiatoren kommen alle diejenigen in Betracht, die in der Lage sind, eine radikalische wässrige Emulsionspolymerisation auszulösen. Es kann sich dabei sowohl um Peroxide, Hydroperoxide, z.B. Alkalimetallperoxodisulfate als auch um Azoverbindungen handeln. Auch werden kombinierte Systeme verwendet, die aus wenigstens einem organischen Reduktionsmittel und wenigstens einem Peroxid und/oder Hydroperoxid zusammengesetzt sind, z.B. tert.-Butylhydroperoxid mit dem Natriumsalz der Hydroxymethansulfinsäure, Wasserstoffperoxid mit Ascorbinsäure oder Natriumperoxodisulfat mit Natriumdisulfit. Bevorzugte kombinierte Systeme enthalten darüber hinaus eine geringe Menge einer im Polymerisationsmedium löslichen Metallverbindung, deren metallische Komponente in mehreren Wertigkeitsstufen auftreten kann, z.B. Ascorbinsäure/Eisen(II)sulfat/Wasserstoffperoxid, wobei anstelle von Ascorbinsäure auch häufig das Natriumsalz der Hydroxymethansulfinsäure, Natriumsulfit, Natriumhydrogensulfit oder Natriumbisulfit und anstelle von Wasserstoffperoxid tert.-Butylhydroperoxid oder Alkaliperoxodisulfate und/oder Ammoniumperoxodisulfat verwendet werden. Anstelle eines wasserlöslichen Eisen(II)-Salzes wird häufig eine Kombination aus wasserlöslichen Eisen- und Vanadium-Salzen benutzt. Bevorzugte Initiatoren sind die Ammonium- oder Alkalimetallsalze von Peroxosulfaten oder Peroxodisulfaten, insbesondere Natrium- oder Kaliumperoxodisulfat.

Für die Herstellung der erfindungsgemäßen Bindemittelpolymerisate wird vorzugsweise neben den für eine Emulsionspolymerisation üblichen oberflächenaktiven Substanzen wenigstens ein aliphatischer nichtionischer Emulgator in Mengen von vorzugsweise 0,5 bis 10 Gew.-%, insbesondere 1 bis 8 Gew.-% und besonders bevorzugt 2 bis 4 Gew.-%, jeweils bezogen auf die Gesamtmonomermenge verwendet. Brauchbare nichtionische Emulgatoren sind aliphatische nichtionische Emulgatoren, beispielsweise Ethoxylate langkettiger Alkohole (EO-Grad: 3 bis 50, Alkylrest: C₈-C₃₆) sowie Polyethylenoxid/Polypropylenoxid-Blockcopolymere. Bevorzugt werden Ethoxylate langkettiger Alkanole (Alkylrest C₁₀-C₂₂, mittlerer Ethoxylierungsgrad 10 bis 50) und darunter besonders bevorzugt solche mit einem linearen C₁₂-C₁₈-Al-kylrest und einem mittleren Ethoxylierungsgrad 10 bis 50 als alleinige, nichtionische Emulgatoren verwendet. Ebenfalls bevorzugt sind Ethoxylate von C12-C18-Alkynolen, insbesondere von Oxoalkolen, die einen Ethoxilierungsgrad im Bereich von 8 bis 50 aufweisen.

Weitere gebräuchliche Emulgatoren sind vorzugsweise anionischer Natur. Hierzu zählen Alkali- und Ammoniumsalze von Alkylsulfaten (Alkylrest: C₈-C₁₂), von Schwefelsäurehalbestern ethoxylierter Alkanole (EO-Grad: 2 bis 50, Alkylrest: C₁₂ bis C₁₈) und ethoxylierter Alkylphenole (EO-Grad: 3 bis 50, Alkylrest: C₄-C₉), von Alkylsulfonsäuren (Alkylrest: C₁₂-C₁₈) und von Alkylarylsulfonsäuren (Alkylrest: C₉ bis C₁₈). Weitere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192-208).

Bevorzugte anionische grenzflächenaktive Substanzen sind Verbindungen der allgemeinen Formel I, 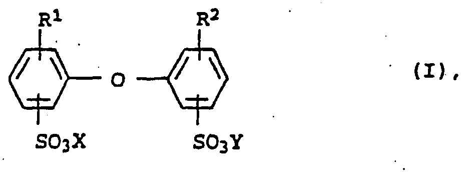 worin R¹ und R² Wasserstoff oder C₄-C₂₄-Alkyl bedeuten und nicht gleichzeitig Wasserstoff sind, und X und Y Alkalimetallionen und/ oder Ammoniumionen sein können. In der Formel I bedeuten R¹ und R² bevorzugt lineare oder verzweigte Alkylreste mit 6 bis 18 C-Atomen oder Wasserstoff, und insbesondere mit 6, 12 und 16 C-Atomen, wobei R¹ und R² nicht beide gleichzeitig Wasserstoff sind. X und Y sind bevorzugt Natrium, Kalium oder Ammonium, wobei Natrium besonders bevorzugt ist. Besonders vorteilhaft sind Verbindungen I, in denen X und Y Natrium, R¹ ein verzweigter Alkylrest mit 12 C-Atomen und R² Wasserstoff oder gleich R¹ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen I sind allgemein bekannt, z.B. aus der US-A 4,269,749, und im Handel erhältlich.

Darüber hinaus können geeignete Schutzkolloide, wie beispielsweise Polyvinylalkohole, Cellulosederivate oder Vinylpyrrolidon enthaltende Copolymerisate eingesetzt werden. Eine ausführliche Beschreibung weiterer geeigneter Schutzkolloide findet sich in Houben-Weyl, Methoden der Organischen Chemie, Bd. 14/1, Makromolekulare Stoffe, Georg-Thieme-Verlag, Stuttgart, 1961, S. 411-420. Die Gesamtmenge an grenzflächenaktiven Substanzen macht üblicherweise bis zu 30 Gew.-%, vorzugsweise 0,5 bis 10 Gew.-% und besonders bevorzugt 2 bis 6 Gew.-%, bezogen auf die zu polymersierenden Monomere aus.

Das Molekulargewicht der Polymerisate kann durch Zugabe geringer Mengen, in der Regel bis zu 2 Gew.-%, bezogen auf die zu polymerisierenden Monomere, einer oder mehrerer, das Molekulargewicht regelnder Substanzen, z.B. organische Thioverbindungen oder Allylalkohole, eingestellt werden. Bevorzugt werden jedoch solche Polymerisate, die in Abwesenheit solcher Verbindungen hergestellt wurden.

Die Emulsionspolymerisation kann sowohl kontinuierlich als auch nach der Batch-Fahrweise, vorzugsweise nach einem halbkontinuierlichen Verfahren erfolgen. Dabei können die zu polymerisierenden Monomere kontinuierlich, einschließlich Stufen- oder Gradientenfahrweise, dem Polymerisationsansatz zugefügt werden. Bevorzugt ist ein Zulaufverfahren mit kurzen Zulaufzeiten, d.h. die Monomere werden, vorzugsweise als wässrige Emulsion, dem Reaktionsansatz innerhalb von 1 bis 4 Stunden, vorzugsweise innerhalb von 1,5 bis 3 Stunden zudosiert. Der nichtionische Emulgator wird vorzugsweise in Mengen bis zu 20 Gew.-%, bezogen auf die Gesamtmenge an nichtionischem Emulgator, vorgelegt, wohingegen der anionische Emulgator vorzugsweise mit den Monomeren dem Reaktionsansatz zugeführt wird.

Neben der saatfreien Herstellungsweise kann zur Einstellung der Polymerteilchengröße die Emulsionspolymerisation nach dem Saatlatex-Verfahren oder in Gegenwart eines in situ hergestellten Saatlatex erfolgen. Verfahren hierzu sind bekannt und können dem Stand der Technik entnommen werden (siehe EP-B 40 419 sowie 'Encyclopedia of Polymer Science and Technology', Vol. 5, John Wiley & Sons Inc., New York, 1966, S. 847).

So empfiehlt der Stand der Technik, beim Zulaufverfahren eine definierte feinteilige Saat-Polymerisatdispersion im Polymerisationsgefäß vorzulegen und dann die Monomere in Gegenwart der Saat zu polymersieren. Hierbei wirken die Saat-Polymerisatteilchen als 'Polymerisationskeime' und entkoppeln die Polymersatteilchenbildung und das Polymerisatteilchenwachstum. Während der Emulsionspolymerisation kann weitere Saatdispersion zugegeben werden. Hierdurch werden breite Größenverteilungen der Polymerisatteilchen erreicht, die insbesondere bei Polymerdispersionen mit hohem Feststoffgehalt oftmals erwünscht sind (vgl. DE-A 42 13 965). Anstelle der Zugabe eines definierten Saatlatex kann dieser auch in situ erzeugt werden. Hierzu wird beispielsweise ein Teil der Monomere und des Initiators zusammen mit Emulgator vorgelegt und auf Reaktionstemperatur erwärmt, wobei ein relativ feinteiliger Latex entsteht. Anschliessend wird im gleichen Polymerisationsgefäß die eigentliche Polymerisation nach dem Zulaufverfahren durchgeführt (siehe auch DE-A 42 13 965).

Die Art und Weise, wie der Initiator der Emulsionspolymerisation zudosiert ist, ist nicht kritisch. Der Initiator kann sowohl vollständig im Polymerisationsgefäß vorgelegt oder aber, nach Maßgabe seines Verbrauchs, im Verlauf der Emulsionspolymerisation kontinuierlich oder stufenweise zugesetzt werden. Die Vorgehensweise hängt sowohl von der chemischen Natur des Initiators als auch von der Polymerisationstemperatur ab und kann vom Fachmann je nach Bedarf gewählt werden. Bevorzugt wird eine kontinuierliche oder stufenweise Zudosierung zum Reaktionsansatz.

Polymerisationsdruck und Polymerisationstemperatur sind gleichfalls von untergeordneter Bedeutung. Im allgemeinen arbeitet man bei Temperaturen zwischen Raumtemperatur und 120°C, vorzugsweise bei Temperaturen von 50 bis 95°C und besonders bevorzugt zwischen 70 und 90°C.

Im Anschluß an die eigentliche Polymerisationsreaktion ist es in der Regel erforderlich, die erfindungsgemäßen wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden.

Die Absenkung der Restmonomere kann weiterhin chemisch durch radikalische Nachpolymerisation, insbesondere unter Einwirkung von Redoxinitiatorsystemen, wie sie z.B. in der DE-A 44 35 423, DE-A 44 19 518 sowie in der DE-A 44 35 422 aufgeführt sind, erfolgen. Als Oxidationsmittel zur redoxinitiierten Nachpolymerisation eignen sich insbesondere Wasserstoffperoxid, tert.-Butylhy-droperoxid, Cumolhydroperoxid oder Alkaliperoxidsulfate. Geeignete Reduktionsmittel sind Natriumdisulfit, Natriumhydrogensulfit, Natriumdithionit, Natriumhydroxymethansulfinat, Formamidinsulfinsäure, Acetonbisulfit (= Natriumhydrogensulfit-Additions-produckt an Aceton), Ascorbinsäure bzw. reduzierend wirkende Zukkerverbindungen, oder wasserlösliche Mercaptane, wie Mercaptoethanol. Die Nachpolymerisation mit dem Redoxinitiatorsystem wird im Temperaturbereich von 10 bis 100°C, vorzugsweise bei 20 bis 90°C durchgeführt. Die Redoxpartner können der Dispersion unabhängig voneinander vollständig, portionsweise bzw. kontinuierlich über einen Zeitraum von 10 Minuten bis 4 Stunden zugegeben werden. Zur Verbesserung der Nachpolymerisationswirkung der Redoxinitiatorsysteme können der Dispersion auch lösliche Salze von Metallen wechselnder Wertigkeit, wie Eisen-, Kupfer oder Vanadiumsalze, zugesetzt werden. Häufig werden auch Komplexbildner zugegeben, die die Metallsalze unter den Reaktionsbedingungen in Lösung halten.

Es ist bevorzugt, die Polymerisatdispersion abschliessend mit einer geruchsarmen Base, vorzugsweise mit Alkali- oder Erdalkalimetallhydroxyden, Erdalkalimetalloxyden oder nichtflüchtigen Aminen zu neutralisieren. Zu den nichtflüchtigen Aminen zählen insbesondere ethoxylierte Diamine oder Polyamine, wie sie z.B. unter dem Namen Jeffamine® (Texaco Chemical Co.) kommerziell erhältlich sind. Vorzugsweise wird die Polymerdispersion nicht mit Ammoniak neutralisiert.

Die erfindungsgemäßen Bindemittelpolymerisate weisen in der Regel Mindestfilmbildetemperaturen unterhalb 10°C, bevorzugt unterhalb 5°C, und besonders bevorzugt ≤ 3°C auf. Die über Lichtstreuung ermittelte mittlere Teilchengröße der in den Bindemitteldispersionen enthaltenen Polymerisatteilchen liegt vorzugsweise im Bereich von 100 bis 300 nm, besonders bevorzugt im Bereich von 120 bis 200 nm.

Die Lichtdurchlässigkeit (s.u.) der Dispersionen liegt in der Regel im Bereich von 40 bis 90 %, vorzugsweise im Bereich von 50 bis 80 %, und insbesondere im Bereich von 50 bis 75 %. Sie körreliert über weite Bereiche mit der Größe der dispergierten Teilchen, d.h. je grösser der LD-Wert (Lichtdurchlässigkeit einer 0,01 gew.-%igen Probe), desto geringer ist der Durchmesser der dispergierten Teilchen.

Die erfindungsgemässen Bindemittelpolymerisate sind aufgrund ihrer Herstellungsweise nahezu vollständig frei von Lösungsmitteln, Monomeren oder anderen flüchtigen Bestandteilen und somit geruchs- und emissionsarm.

Die erfindungsgemäßen Bindemittel eigenen sich zur Herstellung emissionsarmer, lösungsmittelfreier Beschichtungsmassen. Unter Beschichtungsmassen versteht man beispielsweise Kunststoffdispersionsputze, Fliesenkleber, Anstrichmittel und insbesondere emissionsarme Dispersionsfarben. Bevorzugt eignen sich die erfindungsgemäßen Bindemittel für emissionsarme Dispersionsfarben mit hohem Pigmentanteil (PVK, s.o.), vorzugsweise mit einer PVK oberhalb 60 % und insbesondere oberhalb 70 %, wie sie für Innenanstriche verwendet werden.

Solche Beschichtungsmassen sind dem Fachmann im Prinzip bekannt. Eine ausführliche Beschreibung wässriger Kunststoffdispersionsfarben findet sich beispielsweise in Ullmanns Enzyklopädie der Technischen Chemie, 4. Aufl., Bd. 15, S. 664 ff. Die erfindungsgemäßen emissionsarmen Dispersionsfarben oder Putze enthalten in der Regel, bezogen auf die nichtflüchtigen Anteile,
40 bis 94 Gew.-% Füllstoffe,
2 bis 30 Gew.-% Pigment,
0,1 bis 10 Gew.-% Hilfsmittel, und
4 bis 30 Gew.-%, vorzugsweise bis 20 Gew.-%, der erfindungsgemäßen Bindemittel.

Für Dispersionsfarben geeignete Füllstoffe sind beispielsweise Alumosilikate, Silikate, Erdalkalicarbonate, vorzugsweise Calciumcarbonat in Form von Kalzit oder Kreide, Dolomit sowie Aluminiumsilikate oder Magnesiumsilikate wie Talk. Ein typisches Pigment ist beispielsweise Titandioxid, vorzugsweise in der Rutilform. Abtönfarben können jedoch auch farbige Pigmente, beispielsweise Eisenoxyde enthalten. Zu den üblichen Hilfsmitteln zählen Netzmittel, wie Natrium- oder Kaliumpolyphosphate, Polyacrylsäuren, deren Alkalisalze, Polyvinylalkohole etc. Darüber hinaus enthalten diese Dispersionsfarben in der Regel Stoffe, die die Viskosität modifizieren, beispielsweise Celluloseether, wie Hydroxyethylcellulose. Weiterhin können den Dispersionsfarben Dispergiermittel, Entschäumer, Konservierungs- oder Hydrophobiermittel sowie Farbstoffe, Fasern oder weitere Bestandteile zugesetzt werden.

Die erfindungsgemäßen lösungsmittelfreien, emissionsarmen Beschichtungsmassen zeichnen sich gegenüber bereits bekannten Beschichtungsmassen durch eine hohe Abriebfestigkeit auch bei hohen Pigmentvolumenkonzentrationen, beispielsweise bei einer PVK von 75 % (nach DIN 53778) aus.

Das Pigmentbindevermögen der erfindungsgemäßen Bindemitteldispersionen, das bereits ohne Verwendung spezieller Wirkmonomere oder anderer Zusätze das Qualitätsniveau von wässrigen Bindemitteldispersionen des Standes der Technik, die diese speziellen Wirkmonomere oder Zusätze enthalten, erreicht oder gar überschreitet, kann bei Bedarf durch Mitverwendung der vom Stand der Technik empfohlenen Wirkmonomere und/oder Zusätze gesteigert werden. Hier sei beispielsweise die Modifizierung der Bindemittelpolymerisate mit Silangruppen genannt. Diese Modifizierung kann beispielsweise durch Einpolymerisieren von Silanen, die olefinische Doppelbindungen enthalten, z.B. Vinylsilane oder (Meth)acryloxyalkylsilane (s.o. wie auch EP-A 327 006, EP-A 327 376 oder EP-A 612 771) erfolgen. Weiterhin können Silangruppen nach EP-A 640 629 durch Polymerisation in Gegenwart von Epoxysilanen, z.B. Glycidyloxypropyltrimethoxysilan oder nach EP-A 327 376 durch Polymerisation in Gegenwart von Mercaptoalkyltrisalkoxysilanen, z.B. Mercaptopropyltrimethoxysilan, in das Bindemittelpolymerisat eingeführt werden.

Die im folgenden angegebenen Beispiele sollen die Erfindung erläutern, ohne sie jedoch einzuschränken.

### Beispiele

### Analytik

Die Teilchengrösse (Z-Mittelwert) der Polymerisatteilchen wurde durch dynamische Lichtstreuung an einer 0,01 gew.-%igen Dispersion bei 23°C mittels eines Autosizer IIc der Fa. Malvern Instruments, England, ermittelt. Angegeben wird der mittlere Durchmesser der Kumulantenauswertung (cumulant z-average) der gemessenen Autokorrelationsfunktion.

Die Lichtdurchlässigkeit (LD-Wert) wurde an einer 0,01 gew.-%igen Dispersion bei einer Schichtdicke von 25 mm mit weißem Licht in einem handelsüblichen Photometer ermittelt. Gemessen wird relativ zu Wasser, dem ein LD-Wert von 100 % zugeordnet wird.

Die Bestimmung der Mindestfilmbildetemperatur erfolgte in Anlehnung an Ullmanns Enzyklopädie der technischen Chemie, 4. Aufl., Bd. 19, Verlag Chemie, Weinheim (1980), S. 17. Als Meßgerät diente eine Filmbildebank (Metallplatte, an die ein Temperaturgradient angelegt wird). Die Verfilmung erfolgte bei einer Naßschichtdicke von 1 mm. Als Mindestfilmbildetemperatur wird die Temperatur angegeben, bei der der Film beginnt, rissig zu werden.

### 1) Allgemeine Vorschrift zur Herstellung der Bindemittelpolymerisate

### Beispiele 1 bis 33

In ein Polymerisationsgefäß mit Rührer und Rückflußkühler wurden
1,5 g nichtionischer Emulgator in Form von 7,5 g einer 20 gew.-%igen wässrigen Lösung; siehe Tabelle 1
40 g Zulauf I und
200 g entionisiertes Wasser
vorgelegt und unter Rühren auf 85°C erhitzt. Dann wurden 6 g von Zulauf II zugegeben und die Temperatur beibehalten. Nach 15 min wurden unter Beibehaltung der Temperatur, gleichzeitig beginnend, der Rest von Zulauf I innerhalb 120 min (bzw. 180 min) und der Rest von Zulauf II innerhalb 135 min (bzw. 210 min, bei einer Zulaufdauer für I von 180 min) dem Polymerisationsansatz kontinuierlich zudosiert. Nach Beendigung von Zulauf II ließ man 2 Stunden bei 85°C nachreagieren. Dann kühlte man den Reaktionsansatz auf 70°C und gab 0,71 g einer 70 gew.-%igen wässrigen tert-Butylhydroperoxidlösung zu, behielt die Temperatur bei und dosierte innerhalb 30 min 5 g einer 10 %igen wässrigen Natriumhydroxymethansulfinat-Lösung zu. Anschliessend kühlte man den Reaktionsansatz auf Raumtemperatur ab, stellte mit 10 %iger wässriger Natronlauge einen pH-Wert von 7,5 ein und filtrierte durch einen Metallfilter mit 250 µm Maschenweite. Eine Zusammenstellung der Verfahrensparameter sowie die Charakterisierung der erhaltenen Polymerisate hinsichtlich Feststoffgehalt, Lichtdurchlässigkeit und Teilchengröße findet sich in Tabelle 1.

### Zulauf I

- 4 g: Dinatrium-p-dodecyldiphenyletherdisulfonat in Form von 20 g einer 20 gew.-%igen wässrigen Lösung
- 12,5 g: nichtionischer Emulgator 1 in Form von 62,5 g einer 20 gew.-%igen wässrigen Lösung; siehe Tabelle 1
- 4.1 g: Natriumlaurylsulfat in Form von 27 g einer 15 gew.-%igen wässrigen Lösung
- x g: Monomer C; siehe Tabelle 1
- y g: Monomer D in Form der doppelten Menge einer 50 gew.-%igen wässrigen Lösung; siehe Tabelle 1
- 200 g: Styrol (Monomer B)
- 300 g: n-Butylacrvlat (Monomer A)
- 160+x g: Wasser

### Zulauf II

- 1,5 g: Natriumperoxodisulfat
- 60 g: Wasser

**Tabelle 1**

| BSP | Monomer C | | Monomer D | | nichtionischer | | Zul I | FG | MFT | LD | TG |
|---|---|---|---|---|---|---|---|---|---|---|---|
| | | [g] | | [g] | Emulgator | [g] | [min] | [%] | [°C] | [%] | [nm] |
| 1 | -- | 0 | AM | 7,5 | (A) | 14 | 180 | 49,9 | n.b. | 63 | 182 |
| 2 | -- | 0 | AM | 7,5 | (A) | 14 | 120 | 49,5 | 1 | 69 | 168 |
| 3 | AS | 0,5 | AM | 7,5 | (A) | 14 | 180 | 50,3 | n.b. | 64 | 190 |
| 4 | AS | 1,0 | AM | 7,5 | (A) | 14 | 180 | 50,0 | n.b. | 61 | 174 |
| 5 | AS | 1,5 | AM | 7,5 | (A) | 14 | 180 | 49,7 | n.b. | 69 | n.b. |
| 6 | AS | 2,5 | AM | 7,5 | (A) | 14 | 180 | 49,4 | n.b. | 63 | 191 |
| | | | | | | | | | | | |
| 7 | AS | 1,5 | AM | 7,5 | (A) | 14 | 180 | 49,1 | 3 | 63 | 181 |
| V8 | AS | 5,0 | AM | 7,5 | (A) | 14 | 180 | 49,4 | n.b. | 59 | 201 |
| V9 | AS | 7,5 | AM | 7,5 | (A) | 14 | 180 | 49.0 | n.b. | 68 | 180 |
| V10 | AS | 10 | AM | 7,5 | (A) | 14 | 180 | 49,3 | n.b. | 63 | 194 |
| V11 | AS | 12,5 | AM | 7,5 | (A) | 14 | 180 | 49,2 | n.b. | 60 | 213 |
| | | | | | | | | | | | |
| 12 | VS | 1,5 | AM | 7,5 | (A) | 14 | 120 | 49,5 | n.b. | 57 | n.b. |
| 13 | AS | 1,5 | HEA | 7,5 | (A) | 14 | 180 | 48,3 | n.b. | 64 | 170 |
| 14 | AS | 1,5 | HEMA | 7,5 | (A) | 14 | 180 | 48,3 | n.b. | 83 | 126 |
| 15 | AMPS | 2,5 | AM | 7,5 | (A) | 14 | 120 | 49,3 | n.b. | 55 | 225 |
| | | | | | | | | | | | |
| V16 | AS | 0 | AM | 7,5 | -- | 0 | 120 | 49,3 | n.b. | 65 | n.b. |
| 17 | AS | 0 | AM | 7,5 | (A) | 10⁺ | 120 | 50,1 | 1 | 66 | 166 |
| 18 | AS | 0 | AM | 7,5 | (A) | 17,5⁺ | 120 | 49,2 | 0 | 68 | n.b. |
| | | | | | | | | | | | |
| 19 | AS | 2,5 | AM | 7,5 | (B) | 14 | 120 | 49,9 | n.b. | 67 | n.b. |
| 20 | AS | 2,5 | AM | 7,5 | (C) | 14 | 120 | 49,8 | n.b. | 67 | 162 |
| 21 | AS | 2,5 | AM | 7,5 | (D) | 14 | 120 | 49,7 | n.b. | 81 | 138 |
| 22 | AS | 2,5 | AM | 7,5 | (E) | 14 | 120 | 50,1 | n.b. | 74 | n.b. |
| V23 | AS | 2,5 | AM | 7,5 | (F) | 14 | 120 | 49,9 | n.b. | 75 | n.b. |
| V24 | AS | 2,5 | AM | 7,5 | (G) | 14 | 120 | 49,6 | n.b. | 78 | n.b. |
| V25 | AS | 2,5 | AM | 7,5 | -- | 14 | 120 | 49,8 | n.b. | 74 | n.b. |
| 26 | AS | 2,5 | AM | 7,5 | (H) | 14 | 120 | 49,5 | n.b. | 61 | n.b. |
| 27 | AS | 2,5 | AM | 7,5 | (I) | 14 | 120 | 49,6 | n.b. | 72 | n.b. |
| | | | | | | | | | | | |
| 28 | MAS | 2,5 | AM | 7,5 | (A) | 14 | 120 | 49,1 | 2 | 65 | 172 |
| V29 | MAS | 5, 0 | AM | 7,5 | (A) | 14 | 120 | 49,1 | 3 | 64 | 178 |
| V30 | MAS | 10 | AM | 7,5 | (A) | 14 | 180 | 49,5 | n.b. | 63 | 186 |
| 31 | AS | 0 | AM | 7,5 | (K) | 14 | 180 | 49,8 | 0 | 59 | 191 |
| 32 | AS | 0 | AM | 7,5 | (K) | 7,5⁺ | 180 | 49,7 | 1 | 61 | 174 |
| 33 | AS | 0 | AM | 7,5 | (K) | 5,0⁺ | 180 | 49,5 | 0 | 58 | 181 |

| | | | | | | | | | | | |
|---|---|---|---|---|---|---|---|---|---|---|---|
| AS Acrylsäure MAS Methacrylsäure VS Vinylsulfonsäure-Natriumsalz AMPS Acrylamidopropansulfonsäure-Natriumsalz AM Acrylamid HEA 2-Hydroxyethylacrylat HEMA 2-Hydroxymethylmethacrylat FG Feststoffgehalt der Dispersion in Gew.-% TG mittlere Teilchengröße in nm LD Lichtdurchlässigkeit MFT Mindestfilmbildetemperatur V Vergleichsversuch n.b. nicht bestimmt + 1,5 g in Vorlage, Rest in Zulauf I Emulgator (E): Oxoalkoholethoxylat (Alkylrest C₁₃-C₁₅; mittlerer Ethoxylierungsgrad 30) Emulgator (K): Oxoalkoholothoxylat (Alkylrest: Isotridecyl; mittlerer Ethoxylierungsgrad 8) Emulgator (F): Oktylphenolethoxylat (mittlerer Ethoxylierungsgrad 25) Emulgator (G): Oktylphenolethoxylat (mittlerer Ethoxylierungsgrad 50) Sapogenat® T 300 Tributylphenolethoxylat (mittl. Ethoxylierungsgrad 30); Handelsprodukt der Hoechst AG Emulgator (H): PO/EO-Blockcopolymer (EO-Antell von 80 %) | | | | | | | | | | | |

Beispiele 34 bis 36 (variable Initiatorkonzentration)

Die Polymerisation wurde wie in den Beispielen 1 bis 30 mit 1,5 g Acrylsäure (Monomer C) und 7,5 g Acrylamid (Monomer D) und 14 g Emulgator (A) bei einer Zulaufzeit von 120 min für Zulauf I und 135 min für Zulauf II durchgeführt. Die Initiatormenge sowie den Feststoffgehalt und die mittlere Teilchengröße des Polymerisats sind in Tabelle 2 zusammengestellt.

### Zulauf II

- 60 g: entionisiertes Wasser
- Z g: Natriumperoxodisulfat (Tabelle 2)

**Tabelle 2**

| Beispiel | Z [g] | FG [%] | MFT [°C] | LD [%] | TG [nm] |
|---|---|---|---|---|---|
| 34 | 1 | 50,2 | 3 | 70 | 177 |
| 35 | 1,5 | 50,3 | 2,5 | 69 | 177 |
| 36 | 2,5 | 50,5 | 2 | 68 | 177 |

### Beispiele 37 bis 39

Beispiel 37: Die Polymerisation erfolgte wie in den Beispielen 1 bis 30 beschrieben mit 1,5 g Acrylsäure als Monomer C und 7,5 g Acrylamid als Monomer D in Gegenwart von 1,0 g Mercaptopropyltrimethoxysilan (zugegeben über Zulauf I), 1,5 g Natriumperoxodisulfat und 14 g Emulgator (A). Der Feststoffgehalt der Dispersion betrug 49,1 Gew.-% und die mittlere Teilchengröße 205 nm, der LD-Wert lag bei 55 %.

Beispiel 38: Die Polymerisation erfolgte analog der Beispiele 34 bis 36 durch Polymerisation von 250 g 2-Ethylhexylacrylat, 250 g Styrol, 7,5 g Acrylamid und 2,5 g Acrylsäure in Gegenwart von 1,5 g Natriumperoxodisulfat und 14 g Emulgator (A). Teilchengröße 170 nm, Feststoffgehalt 49,1 Gew.-%, LD-Wert 66 %, MFT 4°C.

### 2. Erfindungsgemäße Dispersionsfarben

Die Herstellung der erfindungsgemäßen Dispersionsfarben erfolgte durch Abmischen der in Tabelle 3 für die Rezepturen 1 bis 3 angegebenen Komponenten in der dort angegebenen Reihenfolge mittels eines Dissolvers. Der wechselnde Feststoffgehalt der eingesetzten Dispersionen wurde bei der Einsatzmenge berücksichtigt (siehe Tabelle 4).

**Tabelle 3**

| Farbrezepturen (Angaben in Gewichtsteilen bzw. Gew.-%) | | | |
|---|---|---|---|
| **Farbrezepturen** | **Rezept 1** | **Rezept 2** | **Rezept 3** |
| Wasser | 96 | 106 | 106 |
| Natronlauge (20 %ige wässrige Lösung) | 1 | 1 | 1 |
| Polyacrylsäure-Natriumsalz (35 %ige wässrige Lösung) | 3 | 3 | 3 |
| Natriumpolyphosphat (25 %ige wässrige Lösung) | 3 | 3 | 3 |
| Hydroxyethylcellulose (2 %ige wässrige Lösung) | 180 | 180 | 180 |
| Konservierungsmittel | 3 | 3 | 3 |
| Entschäumer | 4 | 3 | 4 |
| TiO₂ (Rutil, 0,3 µ) | 70 | 65 | 65 |
| Aluminiumsilikat (6 µ) | 5 | 5 | 5 |
| Calcit (5 µ) | 235 | 215 | 215 |
| Calciumcarbonat (gefällt; 0,3 µ) | 55 | 55 | 55 |
| Kreide (2,4 µ) | 100 | 95 | 95 |
| Talk/Dolomit (6 µ) | 65 | 65 | 65 |
| Dispersion | ∗ | ∗ | 130 |
| Wasser | ∗ | - | 70 |
| PVK | 79 % | 81 % | 75 % |
| FG [Gew.%] | 59 | 62 | 57 |
| ∗ siehe Tabelle 4 FG Feststoffgehalt PVK Pigmentvolumenkonzentration | | | |

### Prüfung der Scheuerfestigkeit der mittels der erfindungsgemäßen Dispersionsfarben erhaltenen Anstrichfilme

Die Prüfung erfolgte in Anlehnung an DIN 53778, Blatt 2. Mit Hilfe eines 60 mm breiten Rakels wurde auf eine Leneta-Folie von ca. 430 x 80 mm ein Anstrichfilm aufgezogen, dessen Trokkenschichtdicke 100 µm betrug. Dieser Film wurde bei Raumtemperatur 5, 7 bzw. 28 Tage gelagert. Dann wurde in einem Scheuergerät unter ständigem Zutropfen einer 0,25 gew.-%igen wässrigen Lösung von n-Dodecylbenzolsulfonat-Natriumsalz (z.B. Marlon®A350 der Fa. Hüls) eine Scheuerbürste über den Anstrich geführt. Die Anzahl der Doppelhübe bis zum Durchscheuern des Anstrichs diente als Maß für die Scheuerfestigkeit. Die Ergebnisse sind in Tabelle 4 zusammengefasst.

**Tabelle 4**

| Dispersion [g] (Bsp.) | | Rezept | Wasser [g] | Trockendauer | Scheuerzyclen |
|---|---|---|---|---|---|
| 1 | 110,4 | 1 | 69,4 | 7d | 3360 |
| 2 | 111,3 | 1 | 68,7 | 7d | 3620 |
| 3 | 109,5 | 1 | 70,5 | 7d | 3600 |
| 4 | 110,2 | 1 | 69,8 | 7d | 2560 |
| 5 | 110,9 | 1 | 69,1 | 7d | 2790 |
| 6 | 112,5 | 1 | 67,5 | 7d | 2350 |
| | | | | | |
| 7 | 87,8 | 2 | - | 5d | 290 |
| 37 | 87.9 | 2 | - | 5d | 330 |
| V8 | 87,3 | 2 | - | 5d | 190 |
| V9 | 88,0 | 2 | - | 5d | 160 |
| V10 | 87,5 | 2 | - | 5d | 110 |
| V11 | 87,7 | 2 | - | 5d | 95 |
| | | | | | |
| 12 | 87,2 | 2 | - | 5d | 400 |
| 13 | 89,3 | 2 | - | 5d | 205 |
| 14 | 89,3 | 2 | - | 5d | 335 |
| 15 | 87,5 | 2 | - | 5d | 355 |
| | | | | | |
| V16 | 87,5 | 2 | - | 7d | 800 |
| 17 | 86,1 | 2 | - | 7d | 950 |
| 2 | 87,2 | 2 | - | 7d | 1060 |
| 18 | 87,7 | 2 | - | 7d | 970 |
| | | | | | |
| 19 | 86,5 | 2 | - | 5d | 255 |
| 20 | 86,6 | 2 | - | 5d | 285 |
| 21 | 86,8 | 2 | - | 5d | 330 |
| 22 | 86,1 | 2 | - | 5d | 260 |
| V23 | 89,5 | 2 | - | 5d | 140 |
| V24 | 87,0 | 2 | - | 5d | 110 |
| V25 | 86,6 | 2 | - | 5d | 180 |
| 26 | 87,2 | 2 | - | 5d | 180 |
| 27 | 87,2 | 2 | - | 5d | 295 |
| 28 | 87,2 | 2 | - | 7d | 570 |
| V29 | 87,2 | 2 | - | 7d | 400 |
| V30 | 87,2 | 2 | - | 5d | 125 |
| 34 | 109,8 | 1 | 70,2 | 7d | 2990 |
| 35 | 109,6 | 1 | 70,4 | 7d | 2800 |
| 36 | 109,1 | 1 | 70,9 | 7d | 2630 |
| | | | | | |
| 37 | 112,3 | 1 | 67,7 | 7d | 2970 |
| 38 | 110,2 | 1 | 69,8 | 7d | 2400 |

Wie aus Tabelle 4 ersichtlich ist, besitzen die bei Verwendung der erfindungsgemäßen Bindemittel erhaltenen Anstrichfilme höhere Abriebfestigkeit als Anstrichfilme auf Basis von Bindemitteln mit hohem Gehalt an einpolymerisierten sauren Monomeren.

### 3. Vergleichsversuche mit kommerziell erhältlichen Polymerisatdispersionen

Mowilith® DM 129 und Mowilith LDM 1880 sind schutzkolloidhaltige Polymerisatdispersionen auf Ethylen/Vinylacetat-Basis. Der Feststoffgehalt liegt bei 55 Gew.-%, die mittlere Filmbildetemperatur unterhalb 1°C. Mowilith LDM 1880 enthält etwa 0,2 Gew.-% siliziumhaltige Monomere (Methacryloxipropyltrimethoxisilan). Die Farbdispersionen wurden wie oben beschrieben gemäß Rezept Nr. 3 hergestellt. Von den 55 Gew.-% Mowilith-Dispersionen wurden jedoch nur 118 Gew.-Teile (statt 130 Teile der Dispersion aus Bsp. 2) und entsprechend 82 Gew.-Teile Wasser (statt 70 Teile), bezogen auf 1000 Teile Farbe verwendet. Die Herstellung der Anstrichfilme und die Messung der Scheuerfestigkeit wurde, wie unter 2 beschrieben, durchgeführt. Die Ergebnisse sind in Tabelle 5 zusammengefasst.

**Tabelle 5**

| Dispersion | Trocknung | Scheuerzyklen |
|---|---|---|
| Mowilith® DM 129 | 28 d | 2270 |
| Mowilith® LDM 1880 | 28 d | 3020 |
| Beispiel 2 | 28 d | > 8000 |

135/Hg

## Patentansprüche

1. Bindemittel auf der Basis wenigstens einer wässrigen Polymerisatdispersion mit einer Mindestfilmbildetemperatur unterhalb 10°C, wobei die wässrige Polymerisatdispersion durch radikalische wässrige Emulsionspolymerisation einer Monomermischung, enthaltend
a) 45 bis 70 Gew.-Teile wenigstens eines Monomers, dessen Homopolymerisat eine Glastemperatur Tg < 20°C aufweist,
b) 30 bis 55 Gew.-Teilen wenigstens eines Monomers, dessen Homopolymerisat eine Glastemperatur Tg > 50°C aufweist,
c) 0 bis 0,5 Gew.-Teilen wenigstens eines Monomers mit sauren Gruppen,
d) 0,5 bis 2 Gew.-Teilen wenigstens eines weiteren Monomers, ausgewählt unter Amiden α,β-ungesättigter C₃-C₆-Carbonsäuren, den Hydroxy-C₂-C₆-alkylestern α,β-ungesättigter C₃-C₆-Carbonsäuren und N-Vinyllactamen,
mit der Maßgabe, daß die Summe der Gew.-Teile a) plus b) 100 Gew.-Teile beträgt,
in Gegenwart anionischer Emulgatoren und wenigstens eines nichtionischen, aliphatischen Emulgators erhältlich ist.

2. Bindemittel nach Anspruch 1, wobei das Monomer a) ausgewählt ist unter wenigstens einem C₁-C₁₀-Alkylacrylat, C₅-C₁₀-Alkylmethacrylat, C₅-C₁₀-Cycloalkyl(meth)acrylat, C₁-C₁₀-Dialkylmaleinat und/oder C₁-C₁₀-Dialkylfumarat und das Monomer b) ausgewählt ist unter wenigstens einem vinylaromatischen Monomer und/oder einem α,β-ungesättigten Carbonsäurenitril oder -dinitril.

3. Bindemittel nach Anspruch 1 oder 2, wobei das Monomer c) ausgewählt ist unter α,β-ungesättigten C₃-C₆-Carbonsäuren, α,β-ungesättigten C₄-C₈-Dicarbonsäuren, deren Anhydriden, monoethylenisch ungesättigten Alkylsulfonsäuren und Arylsulfonsäuren.

4. Bindemittel nach einem der vorhergehenden Ansprüche, wobei das Bindemittelpolymerisat aufgebaut ist aus
50 bis 65 Gew.-Teilen der Monomere a),
35 bis 50 Gew.-Teilen der Monomere b),
0 bis 0,5 Gew.-Teilen der Monomere c) und
0,5 bis 2 Gew.-Teilen der Monomere d).

5. Bindemittel nach Anspruch 4, wobei das Bindemittelpolymerisat
0 bis 0,3 Gew.-Teilen der Monomere c) und
0,5 bis 1,5 Gew.-Teilen der Monomere d)
in einpolymerisierter Form enthält.

6. Bindemittel nach einem der vorhergehenden Ansprüche, wobei der nichtionische Emulgator in einer Menge im Bereich von 2 bis 4 Gew.-%, bezogen auf das Gesamtgewicht der Monomere, verwendet wird.

7. Bindemittel nach einem der vorhergehenden Ansprüche, wobei der nichtionische Emulgator ein ethoxyliertes C₈-C₃₆-Alkohol mit einem Ethoxylierungsgrad von 3 bis 50, insbesondere 8 bis 50 und besonders bevorzugt 10 bis 50 ist.

8. Bindemittel nach Anspruch 7, wobei der nichtionische Emulgator ein ethoxyliertes, insbesondere lineares C₁₀-C₂₂-Alkanol mit einem Ethoxylierungsgrad im Bereich von 10 bis 50 ist.

9. Bindemittel nach Anspruch 7, wobei der nichtionische Emulgator ein ethoxyliertes C₁₂-C₁₈-Alkanol, insbesondere ein Oxoalkohol, mit einem Ethoxylierungsgrad von 8 bis 50 ist.

10. Bindemittel nach einem der vorhergehenden Ansprüche, wobei das Bindemittelpolymerisat durch Emulsionspolymerisation in Gegenwart von 0,1 bis 0,5 Gew.-%, bezogen auf das Gesamtgewicht der Monomere, wenigstens eines radikalischen Polymerisationsinitiators erhältlich ist.

11. Bindemittel nach einem der vorhergehenden Ansprüche, wobei das Bindemittelpolymerisat durch Emulsionspolymerisation in Gegenwart von Peroxodischwefelsäure oder einem Alkalimetall- oder Ammoniumsalz davon als Polymerisationsinitiator erhältlich ist.

12. Bindemittel nach einem der vorhergehenden Ansprüche, wobei das Bindemittelpolymerisat durch Emulsionspolymerisation bei Temperaturen im Bereich von 70 bis 90°C erhältlich ist.

13. Bindemittel nach einem der vorhergehenden Ansprüche, wobei das Bindemittelpolymerisat durch Emulsionspolymerisation der Monomere in Abwesenheit einer den Polymerisationsgrad regelnden Verbindung erhältlich ist.

14. Bindemittel nach einem der vorhergehenden Ansprüche, wobei die Teilchen des Bindemittelpolymerisats mittlere Teilchendurchmesser im Bereich von 100 bis 300 nm aufweisen.

15. Bindemittel nach einem der vorhergehenden Ansprüche, wobei die sauren Gruppen der einpolymerisierten Monomere c) in neutralisierter Form vorliegen.

16. Bindemittel nach Anspruch 15, wobei das Polymerisat keine Ammoniumsalzgruppen aufweist.

17. Lösungsmittelfreie, emissionsarme Beschichtungsmassen in Form einer Dispersionsfarbe mit einer Pigmentvolumenkonzentration (PVK) oberhalb 60 % enthaltend wenigstens ein Bindemittel nach einem der Ansprüche 1 bis 16.

18. Beschichtungsmasse nach Anspruch 17, enthaltend, bezogen auf den Feststoffgehalt,
40 bis 94 Gew.-% Füllstoffe,
2 bis 30 Gew.-% Pigmente,
4 bis 30 Gew.-% wenigstens eines polymeren Bindemittels nach einem der Ansprüche 1 bis 16 (berechnet als Feststoff) sowie 0,1 bis 10 Gew.-% übliche Hilfsmittel.

## Claims

1. A binder based on at least one aqueous polymer dispersion having a minimum film-forming temperature of below 10°C, the aqueous polymer dispersion being obtainable by free-radical aqueous emulsion polymerization of a monomer mixture comprising
a) from 45 to 70 parts by weight of at least one monomer whose homopolymer has a glass transition temperature Tg < 20°C,
b) from 30 to 55 parts by weight of at least one monomer whose homopolymer has a glass transition temperature Tg > 50°C,
c) from 0 to 0.5 part by weight of at least one monomer with acidic groups, and
d) from 0.5 to 2 parts by weight of at least one further monomer selected from amides of α,β-unsaturated C₃-C₆ carboxylic acids, the C₂-C₆-hydroxyalkyl esters of α,β-unsaturated C₃-C₆ carboxylic acids and N-vinyllactams,
with the proviso that the sum of the parts by weight of a) plus b) is 100 parts by weight, in the presence of anionic emulsifiers and of at least one nonionic, aliphatic emulsifier.

2. The binder according to claim 1, wherein the monomer a) is selected from at least one C₁-C₁₀-alkyl acrylate, C₅-C₁₀-alkyl methacrylate, C₅-C₁₀-cycloalkyl (meth)acrylate, C₁-C₁₀-dialkyl maleate and/or C₁-C₁₀-dialkyl fumarate and the monomer b) is selected from at least one vinylaromatic monomer and/or an α,β-unsaturated nitrile of a mono- or dicarboxylic acid.

3. The binder according to claim 1 or 2, wherein the monomer c) is selected from α,β-unsaturated C₃-C₆ carboxylic acids, α,β-unsaturated C₄-C₈ dicarboxylic acids, or their anhydrides, monoethylenically unsaturated alkylsulfonic acids and arylsulfonic acids.

4. The binder according to any of the preceding claims, wherein the binder polymer is composed of
from 50 to 65 parts by weight of the monomers a),
from 35 to 50 parts by weight of the monomers b),
from 0 to 0.5 parts by weight of the monomers c) and
from 0.5 to 2 parts by weight of the monomers d).

5. The binder according to claim 4, wherein the binder polymer comprises
from 0 to 0.3 part by weight of the monomers c) and
from 0.5 to 1.5 parts by weight of the monomers d)
in copolymerized form.

6. The binder according to any of the preceding claims, wherein the nonionic emulsifier is used in an amount in the range from 2 to 4 % by weight, based on the overall weight of the monomers.

7. The binder according to any of the preceding claims, wherein the nonionic emulsifier is an ethoxylated C₈-C₃₆-alcohol with a degree of ethoxylation of from 3 to 50, in particular 8 to 50, and with particular preference 10 to 50.

8. The binder according to claim 7, wherein the nonionic emulsifier is an ethoxylated, in particular linear, C₁₀-C₂₂-alkanol with a degree of ethoxylation in the range from 10 to 50.

9. The binder according to claim 7, wherein the nonionic emulsifier is an ethoxylated C₁₂-C₁₈-alkanol, in particular an oxo alcohol, with a degree of ethoxylation of from 8 to 50.

10. The binder according to any of the preceding claims, wherein the binder polymer is obtainable by emulsion polymerization in the presence of from 0.1 to 0.5 % by weight, based on the overall weight of the monomers, of at least one free-radical polymerization initiator.

11. The binder according to any of the preceding claims, wherein the binder polymer is obtainable by emulsion polymerization in the presence of peroxodisulfuric acid or an alkali metal or ammonium salt thereof as polymerization initiator.

12. The binder according to any of the preceding claims, wherein the binder polymer is obtainable by emulsion polymerization at from 70 to 90°C.

13. The binder according to any of the preceding claims, wherein the binder polymer is obtainable by emulsion polymerization of the monomers in the absence of a compound to regulate the degree of polymerization.

14. The binder according to any of the preceding claims, wherein the particles of the binder polymer have mean diameters in the range from 100 to 300 nm.

15. The binder according to any of the preceding claims, wherein the acidic groups of the copolymerized monomers c) are in neutralized form.

16. The binder according to claim 15, wherein the polymer contains no ammonium salt groups.

17. A solvent-free, low-emission coating composition in the form of an emulsion paint with a pigment volume concentration (p.v.c.) of more than 60 % comprising at least one binder according to any of claims 1 to 16.

18. The coating composition according to claim 17, comprising, based on the solids content,
from 40 to 94 % by weight of fillers,
from 2 to 30 % by weight of pigments,
from 4 to 30 % by weight of at least one polymer binder according to any of claims 1 to 16 (calculated as solids), and
from 0.1 to 10 % by weight of customary auxiliaries.

## Revendications

1. Liant à base d'au moins une dispersion aqueuse de polymère, ayant une température minimale de formation de feuil inférieure à 10 °C, la dispersion aqueuse de polymère pouvant être obtenue par polymérisation radicalaire en émulsion aqueuse d'un mélange de monomères contenant
a) 45 à 70 parties en poids d'au moins un monomère dont l'homopolymère présente une température de transition vitreuse Tg inférieure à 20 °C,
b) 30 à 55 parties en poids d'au moins un monomère dont l'homopolymère présente une température de transition vitreuse Tg supérieure à 50 °C,
c) 0 à 0,5 partie en poids d'au moins un monomère à groupes acides,
d) 0,5 à 2 parties en poids d'au moins un autre monomère choisi parmi des amides d'acides carboxyliques en C₃-C₆ α,β-insaturés, les esters hydroxyalkyliques en C₂-C₆ d'acides carboxyliques en C₃-C₆ α,β-insaturés et les N-vinyllactames,
étant entendu que la somme des parties en poids a) plus b) est de 100 parties en poids,
en présence d'émulsifiants anioniques et d'au moins un émulsifiant aliphatique non ionique.

2. Liant selon la revendication 1, dans lequel le monomère a) est choisi parmi au moins un acrylate d'alkyle en C₁-C₁₀, (méth)acrylate d'alkyle en C₅-C₁₀, (méth)acrylate de cycloalkyle en C₅-C₁₀, maléate de dialkyle en C₁-C₁₀ et/ou fumarate de dialkyle en C₁-C₁₀, et le monomère b) est choisi parmi au moins un monomère vinylaromatique et/ou un carbonitrile ou -dinitrile α,β-insaturé.

3. Liant selon la revendication 1 ou 2, dans lequel le monomère c) est choisi parmi des acides carboxyliques en C₃-C₆ α,β-insaturés, des acides dicarboxyliques en C₄-C₈ α,β-insaturés, leurs anhydrides, des acides alkylsulfoniques à insaturation monoéthylénique et des acides arylsulfoniques.

4. Liant selon l'une quelconque des revendications précédentes, dans lequel le polymère à la base du liant est constitué de
50 à 65 parties en poids des monomères a),
35 à 50 parties en poids des monomères b),
0 à 0,5 partie en poids des monomères c) et
0,5 à 2 parties en poids des monomères d).

5. Liant selon la revendication 4, dans lequel le polymère à la base du liant contient
0 à 0,3 partie en poids des monomères c) et
0,5 à 1,5 partie en poids des monomères d)
sous forme copolymérisée.

6. Liant selon l'une quelconque des revendications précédentes, dans lequel l'émulsifiant non ionique est utilisé en une quantité dans la plage allant de 2 à 4 % en poids, par rapport au poids total des monomères.

7. Liant selon l'une quelconque des revendications précédentes, dans lequel l'émulsifiant non ionique est un alcool en C₈-C₃₆ éthoxylé ayant un degré d'éthoxylation de 3 à 50, en particulier de 8 à 50 et, de façon particulièrement préférée, de 10 à 50.

8. Liant selon la revendication 7, dans lequel l'émulsifiant non ionique est un alcanol en C₁₀-C₂₂ éthoxylé, en particulier linéaire, ayant un degré d'éthoxylation dans la plage de 10 à 50.

9. Liant selon la revendication 7, dans lequel l'émulsifiant non ionique est un alcanol en C₁₂-C₁₈ éthoxylé, en particulier un oxoalcool, ayant un degré d'éthoxylation de 8 à 50.

10. Liant selon l'une quelconque des revendications précédentes, dans lequel le polymère à la base du liant peut être obtenu par polymérisation en émulsion en présence de 0,1 à 0,5 % en poids, par rapport au poids total des monomères, d'au moins un amorceur de polymérisation radicalaire.

11. Liant selon l'une quelconque des revendications précédentes, dans lequel le polymère à la base du liant peut être obtenu par polymérisation en émulsion en présence d'acide peroxodisulfurique ou d'un sel de métal alcalin ou d'ammonium de celui-ci, en tant qu'amorceur de polymérisation.

12. Liant selon l'une quelconque des revendications précédentes, dans lequel le polymère à la base du liant peut être obtenu par polymérisation en émulsion à des températures dans la plage de 70 à 90 °C.

13. Liant selon l'une quelconque des revendications précédentes, dans lequel le polymère à la base du liant peut être obtenu par polymérisation en émulsion des monomères en absence d'un composé réglant le degré de polymérisation.

14. Liant selon l'une quelconque des revendications précédentes, dans lequel les particules du polymère à la base du liant ont des diamètres moyens de particule dans la plage de 100 à 300 nm.

15. Liant selon l'une quelconque des revendications précédentes, dans lequel les groupes acides des monomères c) copolymérisés se trouvent sous forme neutralisée.

16. Liant selon la revendication 15, dans lequel le polymère ne comporte pas de groupes sel d'ammonium.

17. Matières de revêtement à faible émission, exemptes de solvant, sous forme d'une peinture en dispersion ayant une concentration volumique de pigment (CVP) supérieure à 60 %, contenant au moins un liant selon l'une quelconque des revendications 1 à 16.

18. Matière de revêtement selon la revendication 17, contenant, sur la base de teneur en matière solide,
40 à 94 % en poids de charges,
2 à 30 % en poids de pigmente,
4 à 30 % en poids d'au moins un liant polymère selon l'une quelconque des revendications 1 à 16 (calculé en tant que matière solide), ainsi que 0,1 à 10 % en poids d'adjuvants usuels.
